# EUROPÄISCHE PATENTSCHRIFT

(11) **EP 2 420 461 B1**
(45) Veröffentlichungstag und Bekanntmachung des Hinweises auf die Patenterteilung: **06.11.2013**
(21) Anmeldenummer: 10008603.2
(22) Anmeldetag: 18.08.2010
(51) Int. Cl.: B65G 59/02, B65G 61/00, B65H 3/32

(54) **Vorrichtung und Verfahren zum Depalettieren von gestapelten Objekten**
Method and device for removing stacked objects from palettes
Dispositif et procédé de dépalettisation d'objets empilés

(43) Veröffentlichungstag der Anmeldung: 22.02.2012
(73) Patentinhaber: SYSTEM GMBH, 40549 Duesseldorf (DE)
(72) Erfinder: Pless, Andreas, D-14163 Berlin (DE)
(74) Vertreter: Schwöbel, Thilo K.

(56) Entgegenhaltungen:
- EP-A1- 0 774 433
- DE-A1- 3 718 601
- US-B1- 6 332 750

## Beschreibung

Die Erfindung geht aus von einer Vorrichtung und einem Verfahren zum Depalettieren von einem auf einer Unterlage angeordneten Stapel von Objekten, insbesondere von einem Stapel aus Druckerzeugnissen, gemäß dem Oberbegriff der Ansprüche 1 und 8.

Solche Vorrichtungen und Verfahren sind im Stand der Technik allgemein bekannt und werden in vielen verschiedenen Industriezweigen eingesetzt, um Stapel von Objekten, wie beispielsweise Papierzuschnitte, Kartonzuschnitte oder Druckerzeugnisse, von einer Palette zu entladen und einer Fördereinrichtung zwecks Weiterverarbeitung zuzuführen. Üblicherweise umfasst eine Palette eine Vielzahl von Stapeln, die nebeneinander angeordnet eine Stapelebene bilden, wobei auf einer Palette meist mehrere Stapelebenen übereinander angeordnet sind. In der Regel werden die einzelnen Stapelebenen zur Stabilisierung der Stapelanordnung durch eine Zwischenlage voneinander getrennt, die vorzugsweise aus Papier, Karton, Folie oder dergleichen besteht. Die Anforderungen an Vorrichtungen zum Depalettieren solcher Paletten sind auf Grund der meist hohen Leistungsfähigkeit der weiterverarbeitenden Vorrichtungen eine hohe Depalettiergeschwindigkeit bei gleichzeitig hoher Zuverlässigkeit. Insbesondere ist es wünschenswert, die Gefahr einer Beschädigung der gestapelten Objekte während des Depalettierens so gering wie möglich zu halten.

Im Stand der Technik werden zum Depalettieren überwiegend Vorrichtungen mit verfahrbaren Greifern eingesetzt, wobei die Greifer Greifmittel aufweisen, um die Unterseite eines Stapels zu untergreifen, so dass der Stapel durch den Greifer von der Palette abgehoben und zu einer weiterverarbeitenden Vorrichtung transportiert werden kann. Um ein einfaches und beschädigungsfreies Untergreifen des Stapels zu ermöglichen, schlägt die Druckschrift DE 101 62 101 A 1 beispielsweise ein Verfahren vor, bei dem ein Stapel vor dem Untergreifen mit einem Saugnapf an der zu untergreifenden Seite leicht angehoben wird, so dass ein Spalt zwischen der Unterseite des Stapels und einer Zwischenlage erzeugt wird, in den ein Greifmittel vergleichsweise leicht eingefahren werden kann. Nachteilig hierbei ist allerdings, dass dieses Verfahren nur bei Objektstapeln anwendbar ist, die zu einem stabilen Bündel zusammengefasst sind, beispielsweise durch einen festen Umschluss mittels einer Banderole. Insbesondere bei einem Stapel aus lose zueinander angeordneten Objekten ist ein Anheben des kompletten Stapels mittels eines Saugnapfs nicht möglich.

Ferner offenbart die Druckschrift DE 37 18 601 A1 eine Vorrichtung zum Depalettieren, bei der mit einem Druckstempel auf die Oberseite eines Stapels eine Andrückkraft derart ausgeübt wird, dass auf einer dem Greifmittel zugewandten Seite des Stapels ein Spalt unterhalb des Stapels gebildet wird. Hierzu sind jedoch vergleichsweise hohe Andrückkräfte erforderlich, die in nachteiliger Weise zu Verformungen oder Beschädigungen der gestapelten Objekte führen können. Das Dokument EP 0 774 433 A1 offenbart eine Vorrichtung gemäß den Oberbegriff des Anspruchs 1.

Aufgabe der vorliegenden Erfindung ist es daher, eine Vorrichtung und ein Verfahren zum Depalettieren eines Stapels von Objekten der eingangs beschriebenen Art bereitzustellen, die die Nachteile der Depalettierungsvorrichtungen des Stands der Technik weitestgehend vermeiden und ein besonders beschädigungsfreies Depalettieren ermöglichen, insbesondere auch für Stapel aus lose zueinander angeordneten Objekten.

Diese Aufgabe wird durch eine Vorrichtung zum Depalettieren von einem auf einer Unterlage angeordneten Stapel von lose zueinander angeordneten Objekten nach Anspruch 1.

Dadurch ist es in vorteilhafter Weise möglich, die Unterseite des Stapels vor und/oder während des Untergreifens des Stapels mittels der Druckluftdüse zu unterblasen und ein Luftkissen zwischen der Unterlage und der Unterseite des Stapels zu erzeugen, um ein einfaches Untergreifen des Stapels durch das Greifmittel sicherzustellen. Es kann somit in vorteilhafter Weise vermieden werden, dass das Greifmittel während des Untergreifens die Unterlage und/oder den zu untergreifenden Stapel beschädigt. Erfindungsgemäß ist es insbesondere vorteilhaft, dass das Greifmittel die Unterseite des Stapels durch eine relativ zur Druckluftdüse ausgeführte Bewegung untergreift. Dadurch ist es möglich, dass die Druckluftdüse während des gesamten Untergreifvorgangs an einer festen und für das Unterblasen besonders geeigneten Position relativ zum untergreifenden Stapel positioniert ist. Es kann somit ein besonders vorteilhaftes Luftkissen unterhalb des Stapels erzeugt werden, welches ein beschädigungsfreies Untergreifen des Stapels durch das Greifmittel ermöglicht. Da erfindungsgemäß während des Untergreifvorgangs keine Bewegung der Druckluftdüse und somit auch keine Bewegung von an die Druckluftdüse angrenzenden Druckluftkanälen, insbesondere Druckluftschläuchen, erfolgt, lässt sich ferner auch das Risiko für Funktionsstörungen der Druckluftdüse, beispielsweise durch Abreißen eines Druckluftschlauchs, weitestgehend minimieren, so dass ein besonders zuverlässiger Betrieb der erfindungsgemäßen Vorrichtung gewährleistbar ist. Die erfindungsgemäße Vorrichtung lässt sich zum Depalettieren einer Vielzahl von unterschiedlichen gestapelten Objekten wie beispielsweise Papierzuschnitten, Kartonzuschnitten, Verpackungszuschnitten, Zeitschriften, Zeitungen, Broschüren, Büchern oder dergleichen einsetzen. Ferner ist die erfindungsgemäße Vorrichtung sowohl in vorteilhafter Weise für Stapel aus lose zueinander angeordneten Objekten als auch für Stapel aus gebündelten Objekten einsetzbar. Weiterhin werden keine speziellen Anforderungen an die für einen Stapel verwendete Unterlage gestellt. Die Unterlage kann beispielsweise als Zwischenlage zwischen zwei übereinander angeordneten Stapelebenen dienen und aus herkömmlicher Pappe, Papier, Folie, Kunststoff, Holz oder dergleichen ausgebildet sein. Weiterhin kann aber auch eine Stapelebene selbst unmittelbar als Unterlage für einen auf der Stapelebene angeordneten Stapel dienen.

Gemäß einer bevorzugten Weiterbildung ist es vorgesehen, dass der Greifer ein Andrückmittel zur Beaufschlagung der Oberseite des Stapels mit einer Andrückkraft aufweist. Dadurch ist es in vorteilhafter Weise möglich, den Stapel während des Unterblas-und Untergreifvorgangs mit einer Andrückkraft derart zu beaufschlagen, dass der Stapel gegen Verschiebungen gesichert wird. Somit kann ein ordnungsgemäßes Untergreifen des Stapels auf vergleichsweise einfache Weise sichergestellt werden. Ferner ist es hierdurch möglich, den Stapel auch nach dem Untergreifen mit einer Andrückkraft zu beaufschlagen, um einen sicheren Transport ohne Verrutschen der einzelnen Objekte des Stapels oder des gesamten Stapels zu gewährleisten. Vorzugsweise ist es vorgesehen, dass die Oberseite des Stapels mit der Andrückkraft in einem dem Greifmittel abgewandten Bereich der Oberseite durch das Andrückmittel beaufschlagt wird. Besonders bevorzugt ist die mittels des Andrückmittels beaufschlagte Andrückkraft regelbar vorgesehen, so dass in vorteilhafter Weise die Andrückkraft an die Beschaffenheit des zu depalettierenden Stapels, beispielsweise an dessen Verformbarkeit, flexibel angepasst werden kann. Erfindungsgemäß ist es insbesondere denkbar, den Stapel während des Unterblas- und Untergreifvorgangs nur mit einer vergleichsweise niedrigen Andrückkraft zu beaufschlagen, so dass trotz Druckbeaufschlagung ein vergleichsweise reibungsarmes Untergreifen des Stapels durch das Greifmittel ermöglicht wird. Die Gefahr von Beschädigungen des Stapels und/oder der Unterlage kann somit in vorteilhafter Weise gering gehalten werden. Ferner ist es denkbar, den Stapel während des Abtransports mit einer vergleichsweise hohen Andrückkraft zu beaufschlagen, um einen festen Zusammenhalt der einzelnen Objekte des Stapels auch bei schnellen oder ruckartigen Bewegungen des Greifers zu gewährleisten und somit einen besonders sicheren Transport zu realisieren.

Weiterhin ist es gemäß einer bevorzugten Weiterbildung vorgesehen, dass der Greifer ein Aufsetzelement zum Aufsetzen auf die Unterlage aufweist. Im Sinne der Erfindung wird durch das "Aufsetzen" ein Zustand hergestellt, bei dem sich das Aufsetzelement und die Unterlage gerade berühren. Hierdurch ist es in vorteilhafter Weise möglich, dass nach dem Aufsetzen des Aufsetzelements auf die Unterlage durch eine entsprechende Absenkbewegung des Aufsetzelements ein Bereich der Unterlage derart herunterdrückt wird, dass sich ein Spalt zwischen der Unterlage und der Unterseite des Stapels bildet. Der gebildete Spalt ermöglicht dann insbesondere ein vorteilhaftes Unterblasen des Stapels mittels der Druckluftdüse. Besonders bevorzugt ist das Greifmittel relativ zum Aufsetzelement in einer im Wesentlichen parallel zur Unterlage verlaufenden Richtung bewegbar. Dadurch ist es möglich, das Greifmittel auf einfache Weise in den durch das Aufsetzelement gebildeten Spalt einzufahren und somit ein besonders beschädigungsfreies Untergreifen des Stapels mittels des Greifmittels sicherzustellen. Insbesondere kann hierdurch ein ordnungsgemäßes Depalettieren des Stapels auch bei Unebenheiten und Deformationen der Unterlage gewährleistet werden.

Gemäß einer bevorzugten Weiterbildung ist es weiterhin vorgesehen, dass das Greifmittel einen Greifzinken umfasst, wobei der Greifzinken bevorzugt keilförmig ausgebildet ist. Dadurch wird ein besonders zuverlässiges Untergreifen des Stapels sichergestellt, wobei gleichzeitig das Risiko einer Beschädigung des zu untergreifenden Stapels und/oder der Unterlage reduziert wird. Erfindungsgemäß denkbar ist es ebenso, dass das Greifmittel eine Mehrzahl von Greifzinken umfasst und insbesondere gabelförmig ausgebildet ist, um einen besonders stabilen Transport des Stapels durch den Greifer zu ermöglichen. Alternativ hierzu ist es auch denkbar, dass das Greifmittel als eine zungenförmige Platte ausgebildet ist.

Weiterhin ist es gemäß einer bevorzugten Weiterbildung vorgesehen, dass die Vorrichtung einen Industrieroboter zum Verfahren des Greifers aufweist. Dadurch ist es in vorteilhafter Weise möglich, den Greifer computergesteuert und präzise an einer geeigneten Position vor dem zu depalettierenden Stapel zu positionieren und den Stapel nach dem Untergreifen durch das Greifmittel zu einer weiterverarbeitenden Vorrichtung zu transportieren. Der Depalettierungsprozess kann somit vergleichsweise einfach automatisiert werden, so dass ein Depalettieren mit hoher Geschwindigkeit bei gleichzeitig hoher Zuverlässigkeit realisierbar ist. Es ist denkbar, dass die Positionierung des Greifers vor dem zu depalettierenden Stapel durch Vorgabe fester Ortskoordinaten des Stapels erfolgt. Erfindungsgemäß bevorzugt ist es jedoch, dass der Greifer einen Sensor zur Positionierung des Greifers relativ zum Stapel aufweist. Dadurch ist es in vorteilhafter Weise möglich, Toleranzen in der Position von Stapeln, z. B. durch transportbedingtes Verrutschen der Stapel auf der Palette, zu kompensieren und den Greifer stets an einer für das Untergreifen der Stapel besonders geeigneten Position zu positionieren. Auf diese Weise kann ein besonders zuverlässiges Depalettieren des Stapels sichergestellt werden. Besonders bevorzugt ist der Sensor als Abstandssensor ausgebildet, so dass eine zuverlässige Bestimmung der Greifkante eines Stapels möglich ist. Erfindungsgemäß denkbar ist beispielsweise die Verwendung von optischen Abstandssensoren, z. B. unter Zuhilfenahme eines Lasers.

Gemäß einer bevorzugten Weiterbildung ist es weiterhin vorgesehen, dass der Greifer ein Saugmittel zum Anheben der Unterlage umfasst. Dadurch ist es vorteilhaft möglich, mittels des Greifers eine Unterlage, insbesondere eine Zwischenlage, nach dem Depalettieren einer kompletten Stapelebene einer Palette zu entfernen, so dass ein automatisiertes Depaletterien mehrerer Stapelebenen einer Palette bzw. der kompletten Palette auf einfache Weise realisierbar ist.

Ein weiterer Gegenstand der Erfindung ist ein Verfahren zum Depalettieren von einem auf einer Unterlage angeordneten Stapel von lose zueinander angeordneten Objekten nach Anspruch 8.

Es ist dadurch in vorteilhafter Weise möglich, mittels der Druckluftdüse vor und/oder während des Untergreifens des Stapels ein Luftkissen zwischen der Unterseite des Stapels und der Unterlage zu erzeugen, so dass ein besonders leichtes und beschädigungsfreies Untergreifen des Stapels realisierbar ist. Weiterhin ist es vorteilhaft, dass keine Bewegung der Druckluftdüse während des Untergreifens stattfindet, so dass ein besonders homogenes Unterblasen der Unterseite des Stapels sichergestellt werden kann.

Die Aufgabe der vorliegenden Erfindung wird ferner durch ein Verfahren zum Depalettieren von einem auf einer Unterlage angeordneten Stapel von Objekten, insbesondere von einem Stapel aus Druckerzeugnissen, gelöst, wobei in einem ersten Schritt ein Greifer relativ zum Stapel positioniert wird, wobei in einem zweiten Schritt die Unterseite des Stapels von einem Greifmittel des Greifers untergriffen wird und wobei in einem dritten Schritt der Stapel durch den Greifer von der Unterlage gehoben wird, wobei die Oberseite des Stapels während des Untergreifens von einem Andrückmittel mit einer ersten Andrückkraft beaufschlagt wird und wobei die Oberseite des Stapels während des Anhebens des Stapels von dem Andrückmittel mit einer zweiten Andrückkraft beaufschlagt wird, wobei die zweite Andrückkraft größer als die erste Andrückkraft ist. Durch die Druckbeaufschlagung der Oberseite des Stapels während des Untergreifens und während des Anhebens des Stapels ist es vorteilhaft möglich, den Stapel gegen ein Verrutschen zu sichern und somit ein besonders zuverlässiges Untergreifen und einen sicheren Transport des Stapels zu realisieren. Erfindungsgemäß ist es vorzugsweise vorgesehen, dass die während des Untergreifens beaufschlagte erste Andrückkraft vergleichsweise niedrig gewählt wird, um ein relativ leichtes Untergreifen des Stapels durch das Greifmittel zu ermöglichen, und dass die während des Anhebens beaufschlagte zweite Andrückkraft vergleichsweise hoch gewählt wird, um einen sicheren Transport des Stapels auch bei schnellen und ruckartigen Bewegungen des Greifers zu gewährleisten. Somit kann insgesamt ein besonders zuverlässiges Verfahren zum Depalettieren des Stapels bereitgestellt werden. Es ist insbesondere auch denkbar, dass die durch das Andrückmittel auf die Oberseite des Stapels beaufschlagte erste Andrückkraft in Abhängigkeit von dem Luftdruck des von der Druckluftdüse erzeugten Luftstroms gewählt wird, so dass sichergestellt werden kann, dass zum einen ein ausreichend großes Luftkissen erzeugt wird und zum anderen ein Verrutschen des Stapels verhindert wird. Vorteilhaft ist weiterhin, dass die Ausführung des Verfahrens eine Vorrichtung mit lediglich einem einzelnen Andrückmittel erfordert, so dass das Verfahren mit verhältnismäßig geringem Kostenaufwand realisierbar ist.

Gemäß einer bevorzugten Weiterbildung der Erfindung ist es vorgesehen, dass im ersten Schritt ein Aufsetzelement des Greifers auf die Unterlage aufgesetzt wird und dass durch anschließendes Absenken des Aufsetzelements ein Spalt zwischen der Unterseite des Stapels und der Unterlage erzeugt wird. Auf diese Weise kann ein vergleichsweise leichtes und beschädigungsfreies Untergreifen des Stapels durch das Greifmittel sichergestellt werden. Besonders bevorzugt ist es vorgesehen, dass der Spalt zwischen der Unterseite des Stapels und der Unterlage im Wesentlichen durch Deformation der Unterlage erzeugt wird. Erfindungsgemäß bedeutet hier ,,im Wesentlichen", dass der Spalt hauptsächlich durch Deformation der Unterlage gebildet wird, wobei nicht gänzlich auszuschließen ist, dass zu einem geringeren Anteil beispielsweise auch eine Deformation von unterhalb des zu depalettiernden Stapels liegenden Stapelebenen zur Spaltbildung beiträgt. Erfindungsgemäß lässt sich somit in vorteilhafter Weise die Gefahr von Beschädigungen tieferliegender Stapelebenen verhindern.

Gemäß einer bevorzugten Weiterbildung ist es vorgesehen, dass das Aufsetzelement nach Aufsetzen auf die Unterlage um eine vorgegebene Strecke abgesenkt wird, wobei die vorgegebene Strecke bevorzugt weniger als oder gleich 2 mm, besonders bevorzugt weniger als oder gleich 1 mm und ganz besonders bevorzugt weniger als oder gleich 0,5 mm beträgt. Dadurch lässt sich in einfacher Weise sicherstellen, dass ein ausreichend großer Spalt zwischen der Unterseite des Stapels und der Unterlage gebildet wird, um ein leichtes und beschädigungsfreies Untergreifen des Stapels zu ermöglichen.

Ferner ist es gemäß einer bevorzugten Weiterbildung vorgesehen, dass das Aufsetzelement nach Aufsetzen auf die Unterlage soweit abgesenkt wird, bis die Unterlage durch das Aufsetzelement mit einer vorgegebenen Kraft beaufschlagt wird. Erfindungsgemäß ist es denkbar, dass die Kraft in Abhängigkeit von der Beschaffenheit der Unterlage und/oder der tieferliegenden Stapelebenen derart vorgegeben wird, dass die Gefahr einer Beschädigung der Unterlage und/oder der tieferliegenden Stapelebenen weitestgehend minimiert wird. Die auf die Unterlage beaufschlagte Kraft lässt sich beispielsweise mittels im Stand der Technik weit verbreiteter Kraftsensoren messen.

Die Erfindung wird im Folgenden anhand von Ausführungsbeispielen unter Bezugnahme auf die beiliegenden, schematischen Zeichnungen näher erläutert. Es zeigen
**Fig. 1** eine schematische Darstellung einer Ausführungsform eines Greifers einer erfindungsgemäßen Vorrichtung,
**Fig. 2** eine schematische Darstellung eines Greifmittels und einer Druckluftdüse des in **Fig.1** dargestellten Greifers,
**Fig. 3****-** **Fig. 8** eine schematische Darstellung der einzelnen Verfahrensschritte einer Ausführungsform des erfindungsgemäßen Verfahrens.

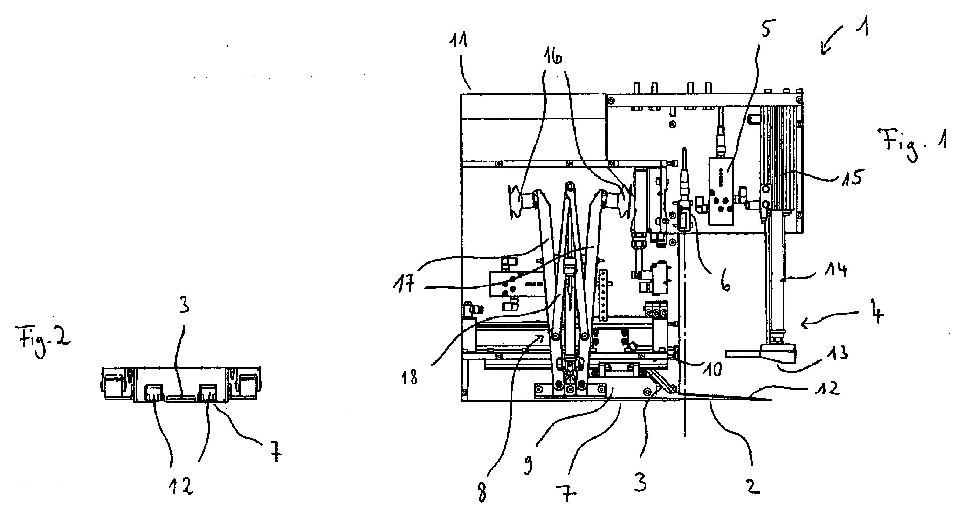

In **Fig.1** ist schematisch eine Schnittdarstellung einer Ausführungsform eines Greifers 1 einer erfindungsgemäßen Vorrichtung zum Depalettieren eines auf einer Unterlage angeordneten Stapels von Objekten dargestellt, wobei der Greifer 1 nahezu vollständig von einem Gehäuse 11 umschlossen ist. Der Greifer 1 umfasst ein Greifmittel 2, welches im Wesentlichen in horizontaler Richtung aus dem Gehäuse 11 ausfahrbar vorgesehen ist und zum Untergreifen eines nicht dargestellten Stapels ausgebildet ist. Das Greifmittel 2 ist hierzu auf einer Führungsschiene 10 mit Hilfe eines Haltemittels 9 beweglich angeordnet, wobei die Führungsschiene 10 fest am Gehäuse 11 befestigt ist. Gemäß der dargestellten Ausführungsform umfasst das Greifmittel 2 zwei keilförmige Greifzinken 12. Der Greifer 1 weist ferner im Bereich des Greifmittels 2 eine Druckluftdüse 3 auf, die ebenfalls fest am Gehäuse 11 befestigt ist und zum Unterblasen eines zu untergreifenden Stapels vorgesehen ist. Eine Frontalansicht des Greifmittels 2 und der Druckluftdüse 3 ist in **Fig.2** dargestellt. Weiterhin umfasst der Greifer 1 ein Andrückmittel 4 mit einer Andrückfläche 13, welche an einer Stange 14 aufgehängt ist und mittels eines Druckzylinders 15 in vertikaler Richtung hydraulisch verfahrbar ist. Es ist hierdurch möglich, die Oberseite eines Stapels im Bereich der Andrückfläche 13 mit einer Andrückkraft zu beaufschlagen, um den Stapel während des Untergreifens und des Transports gegen ein Verrutschen zu sichern. Die beaufschlagte Andrückkraft ist über einen im Gehäuse 11 befindlichen Druckregler 5 regelbar. Der Greifer 1 ist vorzugsweise an einem nicht dargestellten Industrieroboter befestigt und mittels des Industrieroboters in alle Raumrichtungen verfahrbar, so dass der Greifer 1 zum Untergreifen eines auf einer Unterlage angeordneten Stapels an eine hierfür besonders geeignete Position bewegt werden kann. Vor dem Untergreifen des Stapels ist es vorgesehen, dass der Greifer 1 mit der Gehäuseunterseite 7, welche als Aufsetzelement fungiert, auf der Unterlage aufsetzt. Um eine vorteilhafte Positionierung zu ermöglichen, weist der Greifer 1 ferner einen Abstandssensor 6 auf, der beispielsweise als Laserentfernungsmesser ausgebildet ist und zum Erfassen einer Greifkante des Stapels eingesetzt werden kann. Schließlich ist an der Außenseite des Gehäuses 11 ein Saugmittel 8 angeordnet, welches der Aufnahme einer Unterlage, insbesondere einer Zwischenlage, einer zu depalettierenden Palette dient, so dass auch ein automatisiertes Depalettieren mehrerer durch Zwischenlagen voneinander getrennter Stapelebenen ermöglicht wird. Das Saugmittel 8 umfasst vorzugsweise mehrere Greifarme 17, an deren Enden Saugnäpfe 16 zum Ansaugen einer Unterlage angeordnet sind, wobei die Greifarme 17 aus der dargestellten Verstauposition mittels eines Gelenks 18 in eine Ansaugposition gekippt werden können.

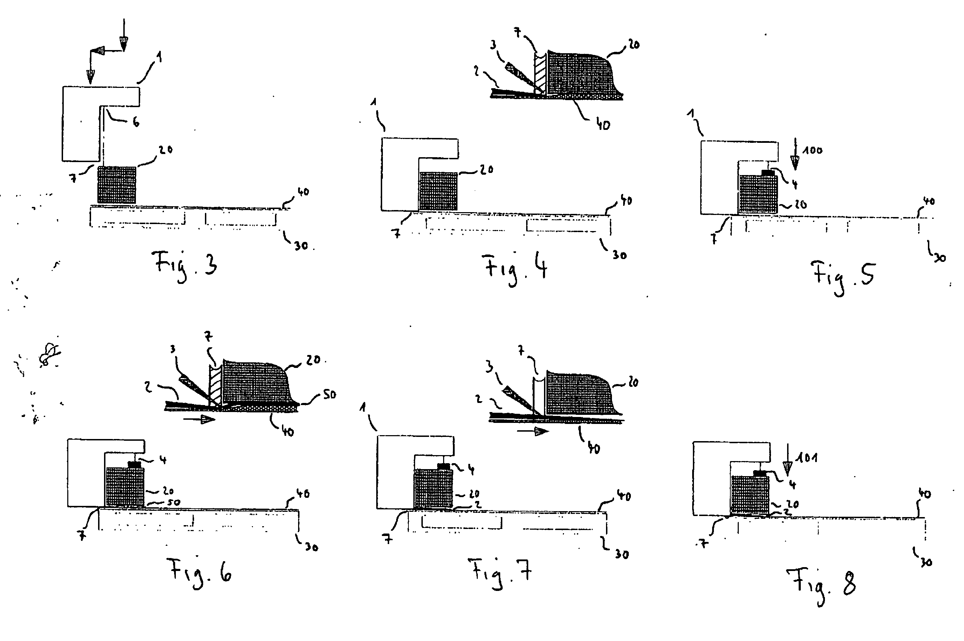

In **Fig. 3** bis **Fig. 8** **ist** schematisch eine Ausführungsform des erfindungsgemäßen Verfahrens zum Depalettieren eines auf einer Unterlage 40 angeordneten Stapels 20 einer Palette 30 dargestellt, wobei in der rechten oberen Ecke der **Fig.4, 6, 7** jeweils zur Verdeutlichung schematisch ein Ausschnitt im Bereich der Greifkante des Stapels 20 vergrößert dargestellt ist. Zunächst wird gemäß **Fig. 3** der Greifer 1 mittels eines nicht dargestellten Industrieroboters an eine für das Depalettieren des Stapels 20 geeignete Position verfahren. Hierzu ermittelt der Abstandssensor 6 die genaue Lage einer Greifkante des Stapels 20. Anschließend senkt sich der Greifer 1 entlang einer Seitenfläche des Stapels 20 ab bis die Gehäuseunterseite 7 des Greifers 1 auf die Unterlage 40 aufsetzt. Durch weiteres Absenken des Greifers 1, vorzugsweise durch weiteres Absenken um eine vorgegebene Strecke, wird gemäß **Fig.4** die Unterlage 40 durch die Gehäuseunterseite 7 derart deformiert, dass sich ein Spalt zwischen der Unterlage 40 und der Unterseite des Stapels 20 bildet. Anschließend wird gemäß **Fig.5** die Oberseite des Stapels 20 mittels des Andrückmittels 4 mit einer senkrecht zur Oberseite wirkenden Andrückkraft 100 beaufschlagt, um ein Verrutschen des Stapels 20 in den nachfolgenden Verfahrensschritten zu verhindern. Erfindungsgemäß wird die Andrückkraft 100 vergleichsweise gering gehalten, um ein reibungsarmes Untergreifen des Stapels 20 mittels des Greifmittels 2 zu ermöglichen. Gemäß **Fig.6** wird vor und während des Untergreifens Luft mittels der nahe der Greifkante angeordneten Druckluftdüse 3 in den durch die Gehäuseunterseite 7 erzeugten Spalt geblasen, so dass sich zwischen der Unterseite des Stapels 20 und der Unterlage 40 ein Luftkissen 50 bildet. Durch dieses Luftkissen 50 kann die Unterseite des Stapels 20 mittels des Greifmittels 2 auf vorteilhafte und beschädigungsfreie Weise untergriffen werden. Zum Untergreifen wird gemäß **Fig.7** das Greifmittel 2 durch eine im Wesentlichen horizontale Bewegung unter den Stapel 20 gefahren. Schließlich wird gemäß **Fig.8** die durch das Andrückmittel 4 auf die Oberseite des Stapels 20 beaufschlagte Andrückkraft 101 erhöht, so dass der Stapel 20 in vorteilhafter Weise fest zwischen dem Greifmittel 2 und dem Andrückmittel 4 geklemmt wird und ein sicherer Transport des Stapels 20 durch den Greifer 1 zu einer weiterverarbeitenden Vorrichtung (nicht dargestellt) sichergestellt wird.

### Bezugszeichenliste

- 1: Greifer
- 2: Greifmittel
- 3: Druckluftdüse
- 4: Andrückmittel
- 5: Druckregler
- 6: Abstandssensor
- 7: Gehäuseunterseite
- 8: Saugmittel
- 9: Haltemittel
- 10: Führungsschiene
- 11: Gehäuse
- 12: Greifzinken
- 13: Andrückfläche
- 14: Stange
- 15: Druckzylinder
- 16: Saugnapf
- 17: Greifarme
- 18: Gelenk
- 20: Stapel
- 30: Palette
- 40: Unterlage
- 50: Luftkissen
- 101: erste Andrückkraft
- 102: zweite Andrückkraft

## Patentansprüche

1. Vorrichtung zum Depalettieren von einem auf einer Unterlage (40) angeordneten Stapel (20) von lose zueinander angeordneten Objekten, insbesondere von einem Stapel (20) aus Druckerzeugnissen, wobei die Vorrichtung einen Greifer (1) mit einem Greifmittel (2) aufweist, wobei das Greifmittel (2) zum Untergreifen der Unterseite des Stapels (20) bewegbar ist, wobei der Greifer (1) eine Druckluftdüse (3) zum Unterblasen der Unterseite des Stapels (20) aufweist, wobei während des Untergreifens keine Bewegung der Druckluftdüse (3) erfolgt, **dadurch gekennzeichnet, dass** das Greifmittel (2) relativ zur Druckluftdüse (3) bewegbar ist.

2. Vorrichtung nach Anspruch 1, **dadurch gekennzeichnet, dass** der Greifer (1) ein Andrückmittel (4) zur Beaufschlagung der Oberseite des Stapels (20) mit einer Andrückkraft (100, 101) aufweist, wobei die Andrückkraft (100, 101) bevorzugt regelbar vorgesehen ist.

3. Vorrichtung nach einem der vorhergehenden Ansprüche, **dadurch gekennzeichnet, dass** der Greifer (1) ein Aufsetzelement (7) zum Aufsetzen auf die Unterlage (40) aufweist, wobei das Greifmittel (2) bevorzugt relativ zum Aufsetzelement (7) in einer im Wesentlichen parallel zur Unterlage (40) verlaufenden Richtung bewegbar ist.

4. Vorrichtung nach einem der vorhergehenden Ansprüche, **dadurch gekennzeichnet, dass** das Greifmittel (2) einen Greifzinken (12) umfasst, wobei der Greifzinken (12) bevorzugt keilförmig ausgebildet ist.

5. Vorrichtung nach einem der vorherigen Ansprüche, **dadurch gekennzeichnet, dass** die Vorrichtung einen Industrieroboter zum Verfahren des Greifers (1) aufweist.

6. Vorrichtung nach einem der vorherigen Ansprüche, **dadurch gekennzeichnet, dass** der Greifer (1) einen Sensor (6) zur Positionierung des Greifers (1) relativ zum Stapel (20) aufweist, wobei der Sensor (6) bevorzugt als Abstandssensor (6) ausgebildet ist.

7. Vorrichtung nach einem der vorherigen Ansprüche, **dadurch gekennzeichnet, dass** der Greifer (1) ein Saugmittel (8) zum Anheben der Unterlage (40) umfasst.

8. Verfahren zum Depalettieren von einem auf einer Unterlage (40) angeordneten Stapel (20) von lose zueinander angeordneten Objekten, insbesondere von einem Stapel (20) aus Druckerzeugnissen, wobei in einem ersten Schritt ein Greifer (1) relativ zum Stapel (20) positioniert wird, wobei in einem zweiten Schritt die Unterseite des Stapels (20) an einer Greifkante von einem Greifmittel (2) des Greifers (1) untergriffen wird und wobei in einem dritten Schritt der Stapel (20) durch den Greifer (1) von der Unterlage (40) gehoben wird, **dadurch gekennzeichnet, dass** die Unterseite des Stapels (20) vor und/oder während des Untergreifens mittels einer Druckluftdüse (3) unterblasen wird, wobei die Druckluftdüse (3) während des Untergreifens an einer festen Position relativ zur Greifkante positioniert ist, wobei während des Untergreifens keine Bewegung der Druckluftdüse (3) erfolgt.

9. Verfahren nach Anspruch 8 oder nach dem Oberbegriff des Anspruchs 8, **dadurch gekennzeichnet, dass** die Oberseite des Stapels (20) während des Untergreifens von einem Andrückmittel (4) mit einer ersten Andrückkraft (100) beaufschlagt wird und dass die Oberseite des Stapels (20) während des Anhebens des Stapels (20) von dem Andrückmittel (4) mit einer zweiten Andrückkraft (101) beaufschlagt wird, wobei die zweite Andrückkraft (101) größer als die erste Andrückkraft (100) ist.

10. Verfahren nach einem der Ansprüche 8, 9, **dadurch gekennzeichnet, dass** im ersten Schritt ein Aufsetzelement (7) des Greifers (1) auf die Unterlage (40) aufgesetzt wird und dass durch anschließendes Absenken des Aufsetzelements (7) ein Spalt zwischen der Unterseite des Stapels (20) und der Unterlage (40) erzeugt wird.

11. Verfahren nach Anspruch 10, **dadurch gekennzeichnet, dass** der Spalt zwischen der Unterseite des Stapels (20) und der Unterlage (40) im Wesentlichen durch Deformation der Unterlage (40) erzeugt wird.

12. Verfahren nach einem der Ansprüche 10, 11, **dadurch gekennzeichnet, dass** das Aufsetzelement (7) nach Aufsetzen auf die Unterlage (40) um eine vorgegebene Strecke abgesenkt wird, wobei die vorgegebene Strecke bevorzugt weniger als oder gleich 2 mm, besonders bevorzugt weniger als oder gleich 1 mm und ganz besonders bevorzugt weniger als oder gleich 0,5 mm beträgt.

13. Verfahren nach einem der Ansprüche 10 bis 12, **dadurch gekennzeichnet, dass** das Aufsetzelement (7) nach Aufsetzen auf die Unterlage (40) soweit abgesenkt wird, bis die Unterlage (40) durch das Aufsetzelement (7) mit einer vorgegebenen Kraft beaufschlagt wird.

## Claims

1. Apparatus for depalletizing a stack (20), arranged on a base (40), of objects that are arranged loosely with respect to one another, in particular a stack (20) of printed products, wherein the apparatus has a gripper (1) having a gripping means (2), wherein the gripping means (2) is movable to engage beneath the underside of the stack (20), wherein the gripper (1) has a compressed-air nozzle (3) for blowing beneath the underside of the stack (20), **characterized in that** no movement of the compressed-air nozzle (3) takes place during the engagement beneath said underside, wherein the gripping means (2) is movable in relation to the compressed-air nozzle (3).

2. Apparatus according to Claim 1, **characterized in that** the gripper (1) has a pressure-exerting means (4) for exerting a pressure force (100, 101) on the top side of the stack (20), wherein the pressure force (100, 101) is preferably provided to be adjustable.

3. Apparatus according to either of the preceding claims, **characterized in that** the gripper (1) has a placement element (7) for placing on the base (40), wherein the gripping means (2) is preferably movable in relation to the placement element (7) in a direction that extends substantially parallel to the base (40).

4. Apparatus according to one of the preceding claims, **characterized in that** the gripping means (2) comprises a gripping tine (12), wherein the gripping tine (12) is preferably formed in a wedge-like manner.

5. Apparatus according to one of the preceding claims, **characterized in that** the apparatus has an industrial robot for moving the gripper (1).

6. Apparatus according to one of the preceding claims, **characterized in that** the gripper (1) has a sensor (6) for positioning the gripper (1) in relation to the stack (20), wherein the sensor (6) is preferably formed as a distance sensor (6).

7. Apparatus according to one of the preceding claims, **characterized in that** the gripper (1) comprises a suction means (8) for lifting the base (40).

8. Method for depalletizing a stack (20), arranged on a base (40), of objects that are arranged loosely with respect to one another, in particular a stack (20) of printed products, wherein in a first step a gripper (1) is positioned in relation to the stack (20), wherein in a second step a gripping means (2) of the gripper (1) engages beneath the underside of the stack (20) at a gripping edge, and wherein in a third step the stack (20) is lifted from the base (40) by the gripper (1), wherein the underside of the stack (20) is blown under by means of a compressed-air nozzle (3) before and/or during engagement beneath said underside, wherein the compressed-air nozzle (3) is positioned at a fixed position in relation to the gripping edge during the engagement beneath said underside, **characterized in that** no movement of the compressed-air nozzle (3) takes place during the engagement beneath said underside.

9. Method according to Claim 8 or according to the preamble of Claim 8, **characterized in that** a first pressure force (100) is exerted on the top side of the stack (20) by a pressure-exerting means (4) during the engagement beneath said underside, and **in that** a second pressure force (101) is exerted on the top side of the stack (20) by the pressure-exerting means (4) during the lifting of the stack (20), wherein the second pressure force (101) is greater than the first pressure force (100).

10. Method according to either of Claims 8 and 9, **characterized in that** in the first step a placement element (7) of the gripper (1) is placed on the base (40), and **in that** a gap is produced between the underside of the stack (20) and the base (40) by subsequent lowering of the placement element (7).

11. Method according to Claim 10, **characterized in that** the gap is produced between the underside of the stack (20) and the base (40) substantially by deformation of the base (40).

12. Method according to either of Claims 10 and 11, **characterized in that** the placement element (7) is lowered by a specified distance after being placed on the base (40), wherein the specified distance is preferably less than or equal to 2 mm, particularly preferably less than or equal to 1 mm, and very particularly preferably less than or equal to 0.5 mm.

13. Method according to one of Claims 10 to 12, **characterized in that** the placement element (7) is lowered after being placed on the base (40) until a specified force is exerted on the base (40) by the placement element (7).

## Revendications

1. Dispositif pour dépalettiser une pile (20) d'objets disposés lâchement les uns par rapport aux autres sur un subjectile (40), en particulier une pile (20) de produits d'imprimerie, le dispositif présentant un préhenseur (1) avec un moyen de préhension (2), le moyen de préhension (2) pouvant être déplacé pour saisir par le dessous le côté inférieur de la pile (20), le préhenseur (1) présentant une buse à air comprimé (3) pour souffler par le dessous sur le côté inférieur de la pile (20), **caractérisé en ce que** pendant la préhension par le dessous, aucun mouvement de la buse à air comprimé (3) n'a lieu, le moyen de préhension (2) pouvant être déplacé relativement à la buse à air comprimé (3).

2. Dispositif selon la revendication 1, **caractérisé en ce que** le préhenseur (1) présente un moyen de pressage (4) pour solliciter le côté supérieur de la pile (20) avec une force de pressage (100, 101), la force de pressage (100, 101) étant prévue de manière à pouvoir de préférence être réglée.

3. Dispositif selon l'une quelconque des revendications précédentes, **caractérisé en ce que** le préhenseur (1) présente un élément à poser (7) devant être posé sur le subjectile (40), le moyen de préhension (2) pouvant de préférence être déplacé par rapport à l'élément à poser (7) dans une direction s'étendant essentiellement parallèle au subjectile (40).

4. Dispositif selon l'une quelconque des revendications précédentes, **caractérisé en ce que** le moyen de préhension (2) présente une pointe de préhension (12), la pointe de préhension (12) étant de préférence réalisée en forme de cale.

5. Dispositif selon l'une quelconque des revendications précédentes, **caractérisé en ce que** le dispositif présente un robot industriel pour le déplacement du préhenseur (1).

6. Dispositif selon l'une quelconque des revendications précédentes, **caractérisé en ce que** le préhenseur (1) présente un capteur (6) pour le positionnement du préhenseur (1) par rapport à la pile (20), le capteur (6) étant de préférence réalisé sous forme de capteur de distance (6).

7. Dispositif selon l'une quelconque des revendications précédentes, **caractérisé en ce que** le préhenseur (1) comprend un moyen aspirant (8) pour soulever le subjectile (40).

8. Procédé pour dépalettiser une pile (20) d'objets disposés lâchement les uns par rapport aux autres sur un subjectile (40), en particulier une pile (20) de produits d'imprimerie, dans lequel, dans une première étape, un préhenseur (1) est positionné par rapport à la pile (20), dans une deuxième étape, le côté inférieur de la pile (20) est saisi par le dessous au niveau d'une arête de préhension par un moyen de préhension (2) du préhenseur (1), et dans une troisième étape, la pile (20) est soulevée par le préhenseur (1) depuis le subjectile (40), une buse à air comprimé (3) soufflant par le dessous sur le côté inférieur de la pile (20) avant et/ou pendant la préhension par le dessous, la buse à air comprimé (3) pendant la préhension par le dessous étant positionnée dans une position fixe par rapport à l'arête de préhension, **caractérisé en ce que** pendant la préhension par le dessous, aucun mouvement de la buse à air comprimé (3) n'a lieu.

9. Procédé selon la revendication 8 ou selon le préambule de la revendication 8, **caractérisé en ce que** le côté supérieur de la pile (20) pendant la préhension par le dessous est sollicité par un moyen de pressage (4) avec une première force de pressage (100) et **en ce que** le côté supérieur de la pile (20) pendant le soulèvement de la pile (20) est sollicité par le moyen de pressage (4) avec une deuxième force de pressage (101), la deuxième force de pressage (101) étant supérieure à la première force de pressage (100).

10. Procédé selon l'une quelconque des revendications 8 ou 9, **caractérisé en ce que** dans la première étape, un élément à poser (7) du préhenseur (1) est posé sur le subjectile (40) et **en ce que** par un abaissement subséquent de l'élément à poser (7), un interstice est réalisé entre le côté inférieur de la pile (20) et le subjectile (40).

11. Procédé selon la revendication 10, **caractérisé en ce que** l'interstice entre le côté inférieur de la pile (20) et le subjectile (40) est produit essentiellement par déformation du subjectile (40).

12. Procédé selon l'une quelconque des revendications 10 ou 11, **caractérisé en ce que** l'élément à poser (7) après la pose sur le subjectile (40) est abaissé d'une distance prédéterminée, la distance prédéterminée étant de préférence inférieure ou égale à 2 mm, particulièrement préférablement inférieure ou égale à 1 mm et tout particulièrement préférablement inférieure ou égale à 0,5 mm.

13. Procédé selon l'une quelconque des revendications 10 à 12, **caractérisé en ce que** l'élément à poser (7), après la pose sur le subjectile (40) est abaissé dans une mesure telle que le subjectile (40) soit sollicité par l'élément à poser (7) avec une force prédéterminée.
